# EUROPEAN PATENT APPLICATION

(11) **EP 4 474 209 A1**
(43) Date of publication of application: **11.12.2024**
(21) Application number: 24179656.4
(22) Date of filing: 03.06.2024
(51) Int. Cl.: B60L 53/67, B60L 53/62

(54) **SYSTEM FOR CHARGING ELECTRIC VEHICLES, A CHARGING DISPENSER, AND METHOD FOR MODIFYING SAID SYSTEM**

(30) Priority: 07.06.2023 NL 2035029
(71) Applicant: EVBox Intelligence B.V., 1014 BA Amsterdam (NL)
(72) Inventor: Klaasse, Sebastiaan, 1014 BA Amsterdam (NL); van Bolhuis, Norbert, 1014 BA Amsterdam (NL); Koenders, Eric, 1014 BA Amsterdam (NL)
(74) Representative: Dogio Patents B.V.

(57) **Abstract**

The invention relates to a system for charging electric vehicles, said system comprising a plurality of charging stations which each comprise one or more charging dispensers that are connected to a common power line, wherein each of said charging dispensers has a current budget assigned thereto, wherein the sum of said current budgets is greater than zero and less than a predefined maximum total current that the system is allowed draw from the power line, wherein the charging dispensers are in communication with each other such that at each charging dispenser a total current budget can be calculated as a sum of all current budgets of, and such that at each charging dispenser it can be determined what share this total current budget is available to the dispenser for charging an electric vehicle connected thereto.

## Description

### Field of the invention

The present invention relates to a system for charging electric vehicles, the system comprising a plurality of charging stations, each charging station comprising a charging dispenser adapted for charging an electric vehicle (EV). Typically, in order to be able to charge an EV, a charging dispenser should be adapted for providing a current of at least 6 Ampere at a voltage of at least 120 Volt. The charging dispensers preferably conform to SAE J1772-201710 and/or IEC 61851-1:2017. The invention further relates to a charging dispenser as may be used in the system, and to a method for modifying such a system, e.g. by adding a charging dispenser to the system, removing a charging dispenser from the system, and/or updating a firmware of a charging dispenser of the system.

### Background of the invention

From US 2022/0314834 A1 a power supply method of an electric vehicle charger in which multiple chargers are connected to the same power supply source is known. The known power supply method comprises operations of allowing an electric vehicle to be connected to a first charger, generating a charging start signal from the first charger, receiving, by one or more other chargers, the charging start signal, generating a charging state signal from the other chargers, the charging state signal generated from the other charges being a charging progress signal or a charging standby signal, receiving, by the first charger, the charging state signal, and determining the amount of supplied power of the first charger. The power supply has a limit to the power available to the for supply, which may be defined as the maximum amount of power. The amount of power supplied by the first charger may be less than or equal to a value obtained by dividing the maximum amount of power by one greater than the number of times a charging progress signal is received by the first charger. For example, when the maximum amount of power that can be supplied by the power supply source is 10 kWh and the total number of received charging progress signals at the first charger is 4, the maximum amount of power supplied to the first charger will be less than or equal to 10/5=2 kWh.

From WO 2012/149965 A1 a charging management system for electric vehicles is known, wherein a maximum charging current for a plurality of charging operations, e.g. for a plurality of charging dispensers and/or electrical vehicles, can be coordinated in a decentralized manner using a "gossiping method", whilst complying with predefined flexibly adjustable secondary conditions, such as number of connected and/or active charging dispensers, energy pricing or availability of energy from renewable energy sources.

### Summary of the invention

According to a first aspect the invention provides a charging system comprising a plurality of charging stations, each charging station comprising a dispenser adapted for charging an electric vehicle and for communicating with the other charging dispensers in the charging system through a communications network, wherein each of said charging dispensers is adapted for being connected to a power grid via a power line common to all charging dispensers in the charging system, wherein each of said charging dispensers has a current budget assigned thereto, wherein the sum of said current budgets is greater than zero and less than a predefined maximum total current, wherein each charging dispenser is adapted for repeatedly carrying out the steps of:
i) determining a vehicle connected value indicative of whether an electric vehicle is connected to the charging dispenser, and determining a charging output value indicative of an actual charging current being output by the charging dispenser for charging said vehicle;
ii) transmitting, via said communications network to the other charging dispensers, a message comprising the charging dispenser's current budget, vehicle connected value, and charging output value, said message conforming to a predetermined specification;
iii) receiving, via said communications network and from each of the other charging dispensers, a message comprising the other charging dispenser's current budget, vehicle connected value, and charging output value;
iv) accepting only those received messages which conform to said predetermined specification;
v) calculating a total current budget as a sum of the current budget of said charging dispenser and the current budgets of the other charging dispensers according to the accepted messages;
vi) for each of said charging dispenser and the charging dispensers from which a message has been received and accepted, determining an offered current for charging an electric vehicle connected to the associated charging dispenser based on the charging dispenser's charging output value and the total current budget; and
vii) in case the vehicle connected value indicates that a vehicle is connected to said charging dispenser, communicating the offered current associated with said charging dispenser determined in step vi) to the electronic vehicle, and/or limiting the maximum power output of said charging dispenser for charging the electric vehicle to the offered current.

Each charging dispenser has a current budget assigned thereto which typically remains constant once the charging system has been installed and connected to the common circuit breaker. Herein, the phrase "current" in current budget relates to electrical current which is typically expressed in Ampere. Though at any time the sum of current budgets of the charging dispensers is less than the predefined maximum total current, an individual charging dispenser may provide power output to an EV which is larger than the dispenser's current budget. By communicating their current budget to all other charging dispensers in the system and receiving the other dispenser's current budgets, each charging dispenser obtains an indication of a total charging current that the charging dispensers may use without exceeding the predefined maximum total current. To achieve this, it is important that all charging dispensers that can share their current budgets with each other, carry out step vi) in the same manner, e.g. by running a same algorithm in step vi), and all have access to the same information as input for carrying out step vi), e.g. for inputting into the algorithm, so that each of these charging dispensers can calculate the same total current, and so that this total budget can, at least partially, be shared among the charging dispensers.

The invention allows current from current budgets to be shared between the charging dispensers, e.g. such that the current budget of a dispenser for which no charging current is requested, e.g. when no EV is connected to the dispenser or when an EV connected to the dispenser is already fully charged, becomes available to one or more other charging dispensers of the system for charging an EV.

For example, a charging system according to the invention may comprise four charging stations, each charging station comprising a charging dispenser, wherein the charging dispensers are all connected to a common power line. The common power line in turn is connected to the power grid via a power breaker circuit, wherein the power breaker circuit is adapted for breaking an electrical connection between the grid and the common power line if current through the breaker circuit exceeds a predefined maximum total current of 48 Ampere. A current budget of 12 Ampere is assigned to each charging dispenser so that the total current budget for all charging dispensers together is less than or equal to the maximum total current. Based on a charging dispenser's own current budget and the current budgets communicated thereto by the other stations, it can be determined at each dispenser that a total current budget of 48 Ampere is available to be shared between all charging dispensers in the system.

When two of the charging dispensers do not have an EV connected thereto, and other two charging dispensers each do have an EV connected thereto for charging, then the total current budget of 48 Ampere available for all four charging dispensers may be partially or completely allocated to only the two charging dispensers to which an EV is connected. For instance, each of the two dispensers to which an EV is connected may then each charge their connected EV using a charging current of 24 Ampere.

In case a charging dispenser is to be added to the system, then the to be added charging dispenser is assigned such a current budget that the sum of current budgets of all stations once the station is added to the system, is less than the predefined maximum total current. In the present example, the to be added charging dispenser would be assigned a current budget of 0. This dispenser can then simply be added to the system by connecting it to the power line and connecting it to the communications network to allow all charging dispensers to communicate with each other. During addition of the new charging dispenser to the system, the charging dispensers that are already part of the system can remain in operation, e.g. can keep on charging an EV or be available for doing so. Once the new charging dispenser has been added, the total current budget that is available to the resulting five charging dispensers of the system will still be 48 Ampere.

In case a charging dispenser is to be removed from the system, it suffices to disconnect the charging dispenser from the common power line and/or from the communications network. If the charging dispenser is disconnected from the communications network, then the other dispensers in the system will no longer receive messages indicating the current budget of the charging dispenser that is to be removed. These other dispensers may continue to operate and share their combined charging budgets amongst each other. Importantly, in contrast to for instance the charger known from US 2022/0314834, as long as the charging dispenser that has been removed from the system of the present invention is connected to the common power line and has a current budget greater than zero, then that charging dispenser may still be used for charging an EV, in particular without the sum of current that is used in the system exceeding the predefined maximum total current. In such a case, the remaining dispensers may together form a first cluster of dispensers which can share their current budgets, while the charging dispenser that has been removed from the system may become part of a separate second cluster of one or charging dispensers, wherein the dispensers of the first and second cluster are connected to the same power common line.

In case a charging dispenser is disconnected from the circuit breaker, but still able to communicate with the other charging dispensers via the network, then any current budget from said charging dispenser may be used by one or more of the other charging dispensers.

Thus, the invention provides a system that allows removal and/or addition of charging dispenser, while only minimally disturbing operation of other charging dispenser in the system.

The steps of determining an offered current may comprise executing an algorithm.

In an embodiment, in step ii) said message in is transmitted in a first data format used by the charging dispenser, and wherein in step iv) only those received messages are accepted that have a same data format as the first data format. As all charging dispensers which can share charging budget amongst each other user the same data format, the risk of an incorrectly formatted message affecting the calculation of the total current budget and/or the determination of the offered currents is substantially reduced.

In an embodiment in step ii) said message further includes an indication of a firmware version of firmware that is active on said charging dispenser, and wherein in step iv) only those messages are accepted in which the indication of the firmware version indicates a same firmware version as the firmware version that is active on the charging dispenser. As all charging dispensers which can share charging budget amongst each other user the same firmware, it can be ensured that these dispensers also carry out step vi) in the same manner, e.g. use the same algorithm, for determining the offered currents.

In an embodiment the charging dispensers are adapted for communicating with each other in a local area network. Thus, no access to internet or the like is required for calculating the offered charging budgets.

In an embodiment the charging dispensers are adapted for performing step ii) of transmitting said message to the other charging dispensers, by means of a broadcast message or a multicast message. Broadcasting a message to all other dispenser that can be reached in the network, or multicasting a message to a plurality of other dispenser that can be reached in the network, provides an efficient manner of communicating data required for calculating the total current budget and/or determining the offered currents. It has been found that when large numbers of charging dispensers, e.g. more than 30 charging dispensers, are to communicate with each other, communication using broadcasting or multicasting is more robust that peer-to-peer communications.

In an embodiment in step i) the charging dispenser further determines a charging current requested by the electric vehicle. if no electric vehicle is connected to the charging dispenser, or optionally, if an electric vehicle that is connected to the charging dispenser is not authorized to charge at said dispenser, then the requested charging current is set to zero. According to this embodiment, in step vi) comprises:
generating an ordered list of the charging dispensers which have a requested current greater than zero;
associating a candidate offered current with each charging dispenser in said list and initially setting each candidate offered current to zero;
associating a minimum charging current with each charging dispenser, indicative of a minimum current required for charging the electric vehicle connected to said charging dispenser;
associating a charging current increment with each charging dispenser, indicative of an amount of current by which the candidate offered current may be increased if the candidate offered current is greater than or equal to the minimum charging current;
carrying out a first traversal of the list of charging dispensers in order, wherein for each charging dispenser in the list being traversed the following applies: if the total current budget is greater than the minimum charging current associated with said charging dispenser, then the candidate offered current is set to said minimum charging current and the minimum charging current is subtracted from the total current budget;
while the total current budget is greater than a charging current increment associated with any of the charging dispensers in the list, carrying out a further traversal of the list of charging dispensers in order, wherein for each charging dispenser in the list being traversed the following applies: if the total current budget is greater than the charging current increment associated with said charging dispenser, and if a sum of the charging current increment and the candidate offered current is less than a maximum charging current, then the charging current increment is added to the candidate offered current and the charging current increment is subtracted from the total current budget; and
setting the offered current for said charging dispenser to be equal to the candidate offered current for said charging dispenser.

This embodiment provides details on steps that may be carried out by any charging dispenser of the system for calculating an offered current for each charging dispenser. These steps typically constitute an algorithm. It will be appreciated that many different algorithms and steps exist which may be suitable for calculating the offered currents, as long as the same steps or algorithm are carried out on all charging dispensers that can share current budget among each other and as long as all of these charging dispensers have access to the same data, e.g. for inputting into the algorithm.

The maximum charging current may be determined as the smallest of any of a maximum charging current that can be received by a vehicle connected to the charging dispenser, a maximum charging current with which the dispenser is able to charge an electric vehicle, and/or a current for which a charging cable that is connected between the electric vehicle and the charging dispenser is rated. For instance, if a vehicle is capable of receiving at most 10 Ampere, and the maximum charging current a dispenser can provide is 12 Ampere, and a cable connected between the vehicle and the dispenser is rated to transfer up to 15 Ampere, then the maximum charging current is 10 Ampere. In another example, if a vehicle is capable of receiving at most 10 Ampere, and the maximum charging current a dispenser can provide is 8 Ampere, and the cable between the vehicle and the dispenser is rated to transfer up to 15 Ampere, then the maximum charging current is 8 Ampere. If the cable were rated up to 5 Ampere, then the maximum charging current would be 5 Ampere.

Preferably, the minimum charging current is communicated by the electric vehicle to the charging dispenser, or alternatively the minimum charging current may be stored in the charging dispenser as a fixed value that is independent from the electric vehicle connected to the charging dispenser. For example, the electric vehicle may communicate its minimum charging current is a value between 3 and 10 ampere, e.g. 6 Ampere. Alternatively, the dispenser may have a fixed value for the minimum charging current, for instance a fixed value which is between 3 and 10 Ampere, e.g. 6 Ampere. The current increment preferably is between 0,5 and 2 Ampere, more preferably between 0,9 and 1,1 Ampere.

In an embodiment for each of said charging dispensers a maximum dispenser current is defined that is indicative of a maximum current the dispenser can provide for charging a vehicle, wherein for one or more of said charging dispensers, preferably for all of said charging dispensers in the system, the maximum charging current is larger than the current budget.

Thus, though a current budget assigned to a dispenser may be less than the maximum current the dispenser is capable of providing, in cases in which the dispenser receives current budget from other dispenser, the dispenser may still output a current that is greater than its current budget.

In an embodiment for each of said charging dispensers a maximum dispenser current is defined that is indicative of a maximum current the dispenser can provide for charging a vehicle, and wherein the predefined maximum total current is lower than the sum of maximum dispenser currents of the charging dispensers of the charging system.

In an embodiment the charging dispensers of the system form at least a first cluster of one or more charging dispensers having a same first firmware version and/or a same first data format, and a second cluster of one or more charging dispensers having said a same second firmware version different from the first firmware version and/or a same second data format different from the second data format. The dispensers of the 1^{st} and 2^{nd} cluster can thus operate independently from each other, while still sharing current budget within each cluster of charging dispensers.

In an embodiment the charging dispensers are connected to the common power line. Preferably the common powerline connects to the power grid via a breaker circuit, wherein the predefined maximum total current is less than a current at which the breaker circuit is adapted to disconnect the power line from the grid. Thus, a single breaker circuit may be user for all charging dispensers in the system.

In an embodiment in case the offered current for a charging dispenser is below a minimum current required for charging, said charging dispenser is placed in a paused mode during which it does not request current from the total current budget, wherein the pause mode has a duration of at least 10 minutes. Thus, the risk of rapid oscillation in charging current that is provided to an electric vehicle may be reduced.

In an embodiment in step ii) the charging dispenser also transmits a message comprising the charging dispenser's current budget, vehicle connected value, and charging output value to itself, and wherein in step iii) the charging dispenser also receives and accepts the message it sent to itself. This embodiment is particularly convenient if the messages are transmitted via broadcast

According to a second aspect, the invention provides a charging dispenser for use in a charging station of a charging system, preferably the system according to the first aspect of the invention, which system comprises a plurality of charging stations which each comprise a charging dispenser, wherein the charging dispenser is adapted for charging an electric vehicle and for communicating with the other charging dispensers through a communications network, wherein said charging dispenser is adapted for being connected to a power grid via a power line common to all charging dispensers in the charging system, wherein for said charging dispenser a maximum charging current is defined that is indicative of a maximum current the dispenser can provide for charging to a vehicle, and
wherein for said charging dispenser a maximum charging current is defined that is indicative of a maximum current the dispenser can provide for charging to a vehicle, and
wherein said charging dispenser has a current budget assigned thereto, wherein the sum of said current budgets of all charging dispensers in the system is greater than zero and less than a predefined maximum total current, wherein said charging dispenser is adapted for repeatedly carrying out the steps of:
   i) determining a vehicle connected value indicative of whether an electric vehicle is connected to the charging dispenser, and determining a charging output value indicative of an actual charging current being output by the charging dispenser for charging said vehicle;
   ii) transmitting, via said communications network to the other charging dispensers, a message comprising the charging dispenser's current budget, vehicle connected value, and charging output value, said message having a first format;
   iii) receiving, via said communications network and from each of the other charging dispensers, a message comprising the other charging dispenser's current budget, vehicle connected value, and charging output value;
   iv) accepting only those received messages according to a criterium that depends on the transmitted message;
   v) calculating a total current budget as a sum of the current budget of said charging dispenser and the current budgets of the other charging dispensers according to the accepted messages;
   vi) for each of said charging dispenser and the charging dispensers from which a message has been received and accepted, executing same steps for determining an offered current for charging an electric vehicle connected to the associated charging dispenser based on the charging dispenser's charging output value and the total current budget;
   vii) in case the vehicle connected value indicates that a vehicle is connected to said charging dispenser, communicating the offered current associated with said charging dispenser determined in step vi) to the electronic vehicle, and/or limiting the maximum power output of said charging dispenser for charging the electric vehicle to the offered current.

According to a third aspect, the invention provides a method for operating a charging system according to the first aspect, comprising, for each charging dispenser in the system, carrying out the steps of:
i) determining a vehicle connected value indicative of whether an electric vehicle is connected to the charging dispenser, and determining a charging output value indicative of an actual charging current being output by the charging dispenser for charging said vehicle;
ii) transmitting, via said communications network to the other charging dispensers, a message comprising the charging dispenser's current budget, vehicle connected value, and charging output value, said message having a first format;
iii) receiving, via said communications network and from each of the other charging dispensers, a message comprising the other charging dispenser's current budget, vehicle connected value, and charging output value;
iv) accepting only those received messages according to a criterium that depends on the transmitted message;
v) calculating a total current budget as a sum of the current budget of said charging dispenser and the current budgets of the other charging dispensers according to the accepted messages;
vi) for each of said charging dispenser and the charging dispensers from which a message has been received and accepted, executing same steps for determining an offered current for charging an electric vehicle connected to the associated charging dispenser based on the charging dispenser's charging output value and the total current budget;
vii) in case the vehicle connected value indicates that a vehicle is connected to said charging dispenser, communicating the offered current associated with said charging dispenser determined in step vi) to the electronic vehicle, and/or limiting the maximum power output of said charging dispenser for charging the electric vehicle to the offered current.

For example, the criterium may be that in step ii) said message in is transmitted in a first data format used by the charging dispenser, and wherein in step iv) only those received messages are accepted that have a same data format as the first data format. As all charging dispensers which can share charging budget amongst each other user the same data format, the risk of an incorrectly formatted message affecting the calculation of the total current budget and/or the determination of the offered currents is substantially reduced. Additionally and/or alternatively, the criterium may be that in step ii) said message further includes an indication of a firmware version of firmware that is active on said charging dispenser, and wherein in step iv) only those messages are accepted in which the indication of the firmware version indicates a same firmware version as the firmware version that is active on the charging dispenser. As all charging dispensers which can share charging budget amongst each other user the same firmware, it can be ensured that these dispensers also use the same steps for determining the offered currents.

In an embodiment the method further comprises: adding one or more additional charging dispensers to the system, comprising: assigning a current budget to each of said one or more additional charging dispensers such that the sum of current budgets of all charging dispensers in the system, once said additional charging dispenser have been added to the system, is less than the predefined maximum total current, and adding the one ore more additional charging dispensers to the system by connecting them to the common power line and coupling them to the communications network, wherein during said adding charging dispensers present in the system before the one or more additional dispensers are added are allowed to continue operating in a regular manner; preferably wherein the current budgets of the charging dispensers that are part of the system prior to adding the additional charging dispensers remain unaltered.

Herein, allowing a charging dispenser to continue operate in a regular manner comprises allowing said charging dispenser to continue charging an electric vehicle connected thereto, and/or continue being available for charging an electric vehicle.

In an embodiment the method further comprises removing one or more charging dispensers from the system, wherein during said removing the remaining charging dispensers in the system are allowed to continue operating in a regular manner.

In an embodiment the method further comprises replacing a firmware of one or more charging dispensers of the system with different firmware, wherein during said replacing the remaining charging dispensers in the system are allowed to continue operating in a regular manner.

### Brief description of the drawings

Embodiments of the invention will now be illustrated in the drawings, in which same reference numerals refer to same or like structures, and in which:
Fig. 1A shows a charging system according to the invention, in which all charging dispensers of the system are used for charging an electric vehicle;
Fig. 1B shows the charging system of Fig. 1A, in which only some of the charging dispensers are used for charging an electric vehicle;
Fig. 1C shows a charging system comprising the charging system of Fig. 1A to which an additional charging dispenser has been added;
Fig. 1D shows the charging system of Fig. 1A in which communication between one of the charging dispensers and the other charging dispensers is disrupted;
Fig. 1E shows the charging system of Fig. 1A in which a power line between one of the charging dispensers and the other charging dispensers has been cut;
Figs. 2A - 2C each show an example of a charging station as may be used in a system according to the present invention;
Fig. 3 shows a flowchart with details of an steps that may be executed by each charging dispenser in a system of the invention, for determining an offered current for said charging dispenser as well as for other charging dispensers in communication therewith; and
Fig. 4A and 4B show flowcharts with substeps of steps of Fig. 3.

### Detailed description of the invention

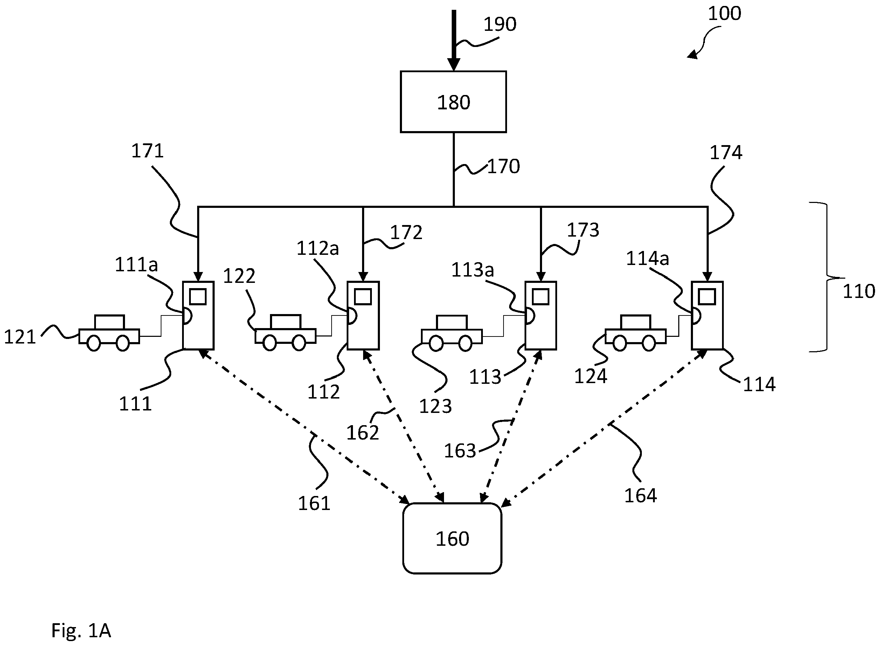

Fig. 1A shows a charging system 100 according to the present invention, comprising a plurality 110 of charging stations 111, 112, 113, 114. The charging stations are each provided with a charging dispenser 111a, 112a, 113a, 114a that is adapted for charging an electric vehicle 121, 122, 123, 124. Though only four charging stations and four charging dispensers are shown, it will be appreciated that a charging system according to the invention may comprise tens or hundreds of charging stations, each with one or more charging dispensers.

All charging dispensers are connected via a respective power cable 171, 172, 173, 174 to a common power line 170, which in turn is connected, via an overcurrent protection breaker 180 that is common to all charging dispensers of the system, to the electrical power grid 190. In the example shown, the breaker has a predefined maximum total current of 48 Ampere above which the breaker trips. In Fig. 1A, each of the charging dispensers 111a, 112a, 113a, 114a is connected, via a charging cable as known in the art, to a corresponding electric vehicle 121, 122, 123, 124 for charging these vehicles. In order to be able to communicate with each other, the charging dispensers are connected to a switch 160 via communications links 161, 162,163,164. In the example these links are wired links, though alternatively or additionally wireless links might be used. The charging dispensers and the switch together form a local area network over which each charging dispenser may transmit a message to all of the other dispensers via a broadcast message, and via which each charging dispenser may receive messages that have been transmitted by the other charging dispensers.

A current budget has been assigned to each of the charging dispensers 111a, 112a, 113a, 124a in such a manner that a sum of the current budgets of all dispensers is less than the predefined maximum total current. In the example shown in Fig. 1A, each dispenser has been assigned a same current budget of 12 Ampere, obtained by dividing the predefined total maximum current of 48 Ampere by the total number of four charging dispensers in the system.

Though in the example shown the predefined total maximum current is defined by the breaker 180, it will be understood the total maximum current may additionally, or instead, be defined based on other factors, such a contract with an energy provider, availability of power from the grid 190, power cables used, and so on.

Each of the EVs draws current from the charging dispenser it is connected to. The dispensers are adapted such that the total sum of current offered by the dispensers 111a, 112a,113a,114a, never exceeds the total current budget, in this manner substantially preventing the maximum current through the breaker 180 from exceeding the predefined maximum total current during normal operating circumstances. An example of steps for determining a current offered by each of the charging dispensers may be calculated will be provided below. These steps may also be denoted as an algorithm. Though many different algorithms may suffice, the same algorithm / steps should run on charging dispensers that can share current budget with each other, and each of these charging dispensers should receive the same data as input, e.g. for inputting into the algorithm, so that at each charging dispenser an offered current for said charging dispenser and offered currents for the other charging dispenser with which current can be shared, can be deterministically determined.

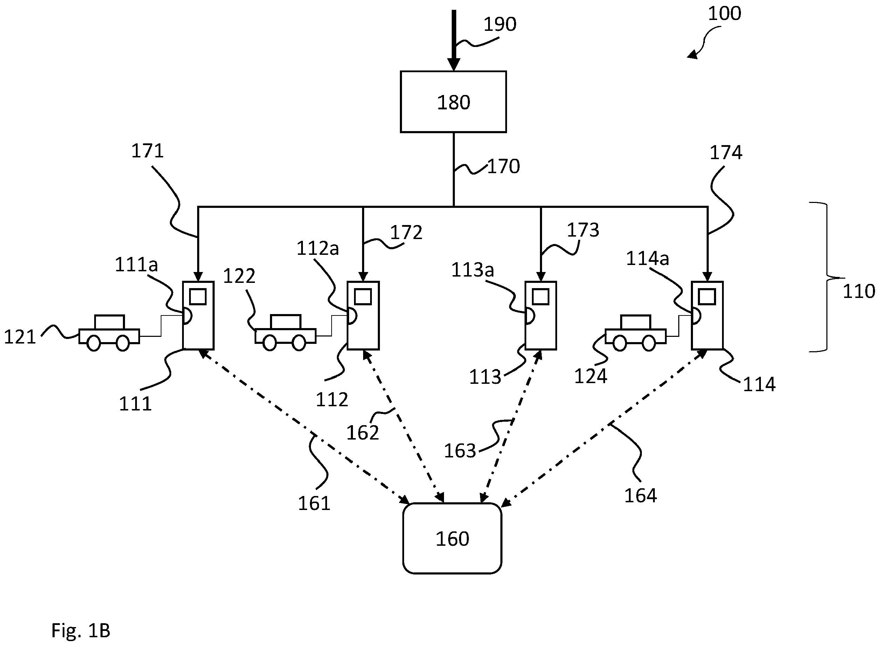

Fig. 1B shows the charging system of Fig. 1A, in which no EV is connected to charging dispenser 113a. This charging dispenser 113a thus does not draw current for charging an EV, here indicated by showing the charging dispenser in solid black, as opposed to the other charging dispensers 111a, 112a and 114a which in Fig. 1B are used to charge EVs connected thereto.

Each charging dispenser repeatedly checks the total current budget, and when appropriate, adapts its offered current, i.e. the current offered the charging dispenser for charging an EV connected thereto, if any. Each charging dispenser still has a current budget of 12 Ampere, so that the total current budget remains 48A. However, as dispenser 113a does not use its current budget for charging an EV, its current budget can be shared among the dispensers to which an EV is connected for charging. Each dispenser 111a, 112a, 114a may thus provide an offered current of 48/3 =18 Ampere, which is larger than the current budget of each individual charging dispenser.

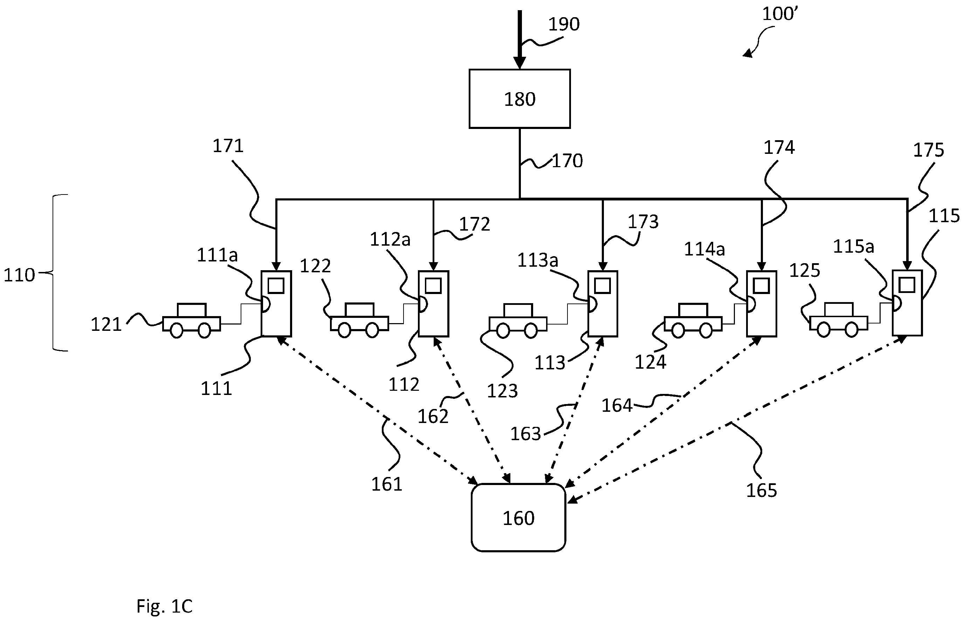

Fig. 1C shows a charging system 100' according to the invention, in addition to comprising the same components as the charging system 100 of Fig 1A, further comprises an additional charging dispenser 115 that has been added after installation of the charging system 100 was completed. Regardless of how many dispensers the system 100'has, the predefined maximum total current that can be provided through power line 170 without tripping the breaker 180 remains 48 Ampere. In order to be able to add the additional charging dispenser 115a without risk of exceeding the predefined maximum total current, the current budget for the charging dispenser 115a is set to zero. Once the current budget for charging dispenser 115a has been thus set, the power cable 175 is connected between the charging dispenser 115a and the common power line 170, and the charging dispenser 115a is added to the local network via link 165 so that it may communicate with the other dispensers. The invention thus allows one or more additional charging dispenser to be added to a charging system that is already in operation, substantially without affecting operation of charging dispensers that were already present in the charging system before. In the example shown, electric vehicle 121 has finished charging, i.e. no longer draws current from charging dispenser 111a for charging. Thus, the total charging budget of 48 Ampere can be shared between the four other charging dispensers for charging the EVs connected thereto. For instance, each of the charging dispensers 112a, 113a, 114a, 115a may provide a current of 48 / 4 = 12 Ampere to an EV connected thereto. If another electric vehicle were to start charging at charging dispenser 111a, the total current budget of 48 Ampere would be shared by the 5 dispensers, for instance allowing each dispenser to offer a current of 48 / 5 = 9,6 Ampere for charging the electric vehicle connected thereto.

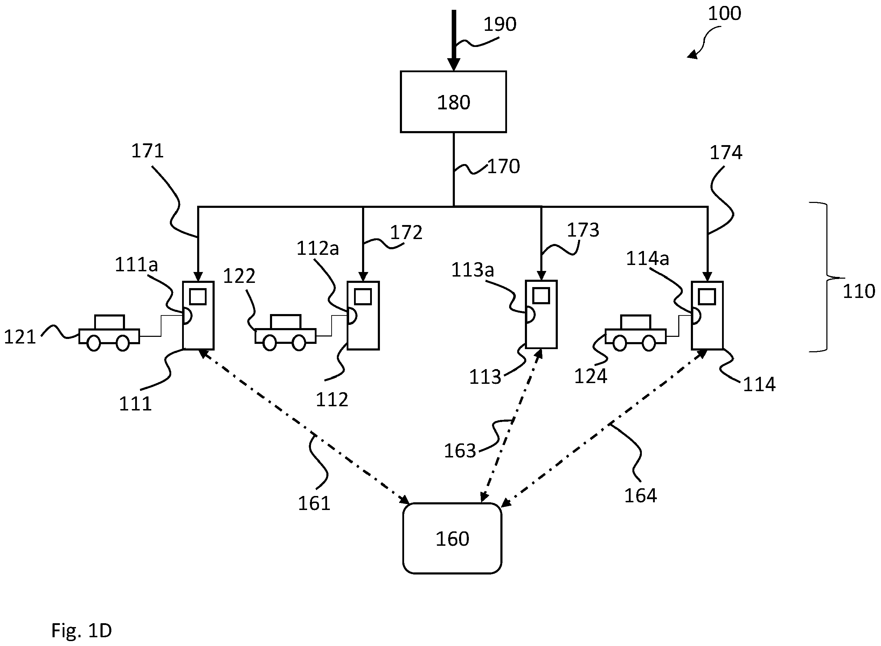

Fig. 1D illustrates how the charging system of Fig. 1A can cope in case the communications link 162 (shown in Fig. 1A) to charging dispenser 112a is out of order. The affected charging dispenser 112a is here shown using hatching to indicate a malfunction of it communications link. Each of the charging dispensers still has its assigned charging budget of 12 Ampere. However, due to the break in communication between dispenser 112a and the other dispensers 111a, 113a and 114a, no current budget can be shared between dispenser 112a and the other dispensers. Dispenser 112a however can continue to charging vehicle 122 connected thereto a current that is at most equal to the dispenser's current budget. The remaining dispenser which can still communicate with each other, can continue to share their charging budgets. For instance, the total charging budget for dispensers 111a, 113a and 114a is 12*3 = 36 Ampere. This total charging budget can be shared between the dispensers that can still communicate with each other and which are charging a vehicle, i.e. between the two dispensers 111a and 114a, e.g. so that each of these can offer a charging current of 36 /2 = 18 Ampere for charging an EV connected thereto.

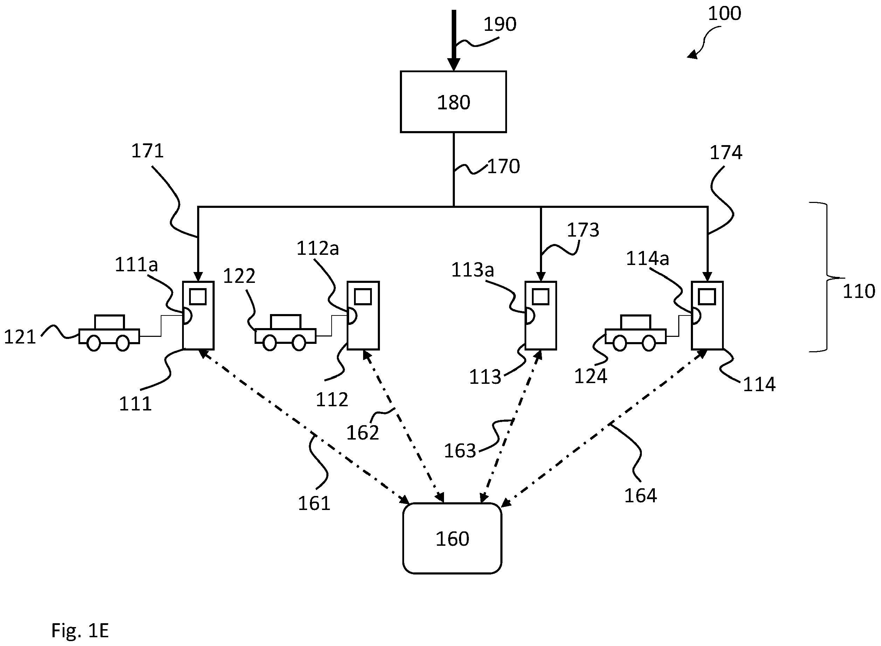

Fig. 1E illustrates how the charging system of Fig. 1A can cope in case the power line 172 (shown in Fig. 1A) to charging dispenser 112a is cut. In this case, charging dispenser 112a cannot provide any current for charging the EV 122 connected thereto. However, if communication between dispenser 112a and the other dispensers is still functioning, then the current budget that is assigned to dispenser 112a can still be communicated to the other charging dispensers and share it with the other dispensers. Thus, in Fig. 1A if the link 162 is still functioning, then dispensers 111a, 113a and 114a can calculate a total current budget of 48 Ampere and share this budget among dispensers 111a, 114a for charging an EV connected thereto.

If communications between dispenser 112a and the other dispensers has been disrupted, then the current budget of dispenser 112a is unknown to the other dispensers. The other dispensers 111a, 113a, 114a will then each calculate a total current budget of 3 *12 = 36 Ampere, to be shared between dispensers 111a and 114a.

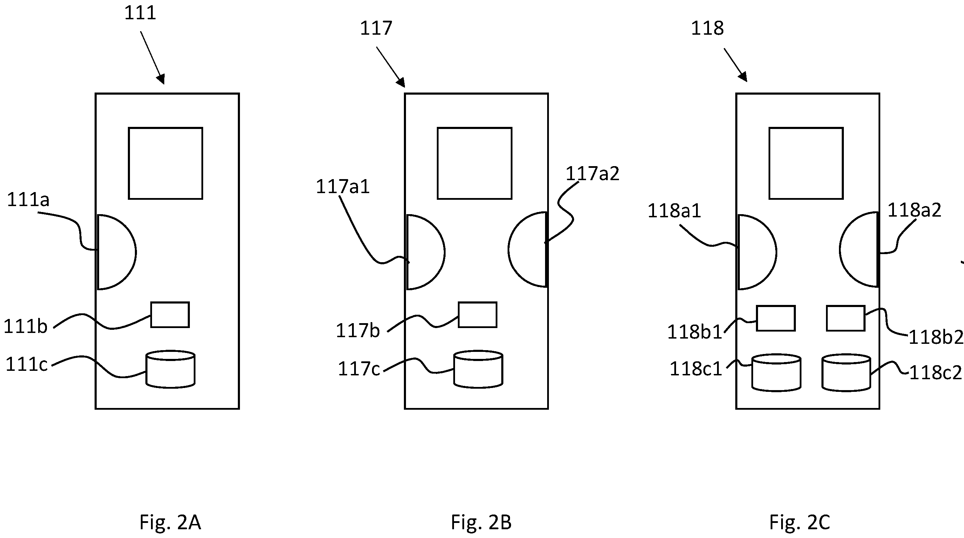

Figs. 2A, 2B and 2C schematically show different embodiments of charging stations as may be used in the charging system of the invention. The charging station 111 shown in Fig. 2A comprises only a single dispenser 111a, and further comprises a memory storing instructions, and a processor connected to said memory, wherein the processor is configured, when executing the instructions for controlling the dispenser, in particular for controlling the dispenser to carry out steps i) - vi) of the independent claims.

The charging station 117 of Fig. 2B comprises two charging dispensers 117a1, 117a2 in the same charging station. The charging station 117 further comprises a memory 117c storing instructions, and a processor 117b connected to said memory, wherein the processor is configured, when executing the instructions for controlling both of the dispensers 117a1, 117a2, in particular for controlling each of these dispensers to carry out steps i) - vi) of the independent claims.

The charging station of 118 of Fig. 2C also comprises two charging dispensers 118a2, 118a2in the same charging station. However, in this embodiment, each dispenser is provided with its own memory 118b1, 118b2 and processor 118c2,11cb, separate from the memory and processor of the other charging dispenser.

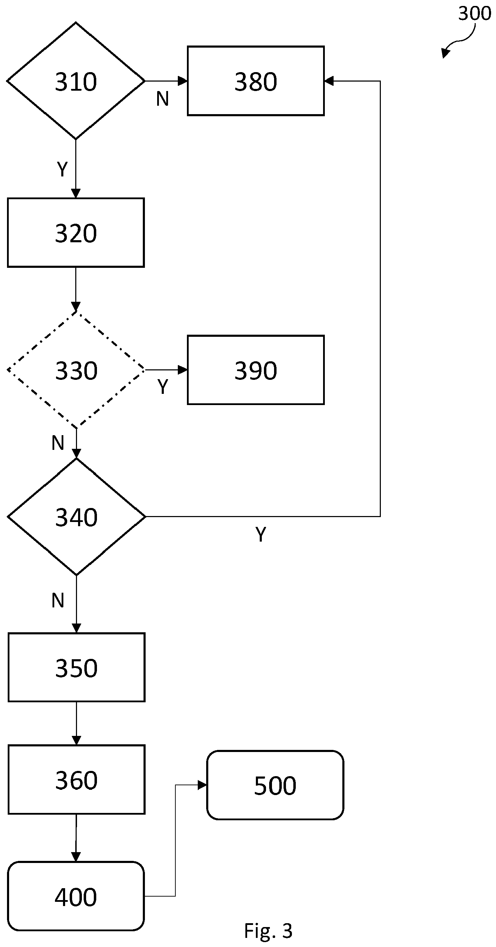

Fig.3 shows a flow chart of steps that may be executed by each dispenser of a charging system of the present invention, in order to determine the offered current for one or more charging dispensers of said system. These steps together form an algorithm. For ease of reading, in the following the charging dispenser executing the algorithm is denoted as the local dispenser, and where appropriate any other charging dispenser of the system is denoted non-local charging dispenser.

In step 310, the local dispenser checks whether a requested charging current of a vehicle that is connected to the local dispenser is zero. If no electric vehicle is connected to the charging dispenser, or optionally, if an electric vehicle that is connected to the charging dispenser is not authorized to charge at said dispenser, then the requested charging current is considered to be zero. If the requested charging current for said local dispenser is zero or considered to be zero, then the offered current for the local dispenser is set to zero in step 380. Otherwise, in step 320 based on the messages that were received from charging dispensers in the network and accepted, the local dispenser generates a list of charging dispensers, wherein the local dispenser is also part of the list.

Optionally, as next step 330 of checking whether a unidirectional network problem in communication between the local dispenser and any of the other dispensers from which messages were received and accepted is detected. For instance, a unidirectional network problem may be detected if it is found that the local charging dispenser can receive messages form the other dispensers, but is unable to transmit message via the network to other dispensers.

If in optional step 330 such a unidirectional network problem is detected, then the offered current for the local dispenser is set to be equal to the local dispenser's current budget. Otherwise, or if step 330 is omitted altogether, then in step 340 it is checked whether the total current budget is greater than the predefined maximum total current. If so, then the offered current for the local dispenser is set to zero in step 380, to prevent that current drawn by the system from exceeding the predefined maximum total current. Otherwise, in step 350, the list is sorted to generate an ordered list. It is noted that an identical ordered list is typically generated not just by the local dispenser, but also by each dispenser from which the local dispenser received a message that was accepted by the local dispenser. The sorting order may be based for instance on the charging output value, and/or on factors such as a dispenser ID or amount of time a charging dispenser has been continuously charging, as may be included in messages that conform to the predetermined specification. The predetermined specification typically comprises a version number of the specification used and/or a version of firmware that is active on the charging dispenser that sent the message.

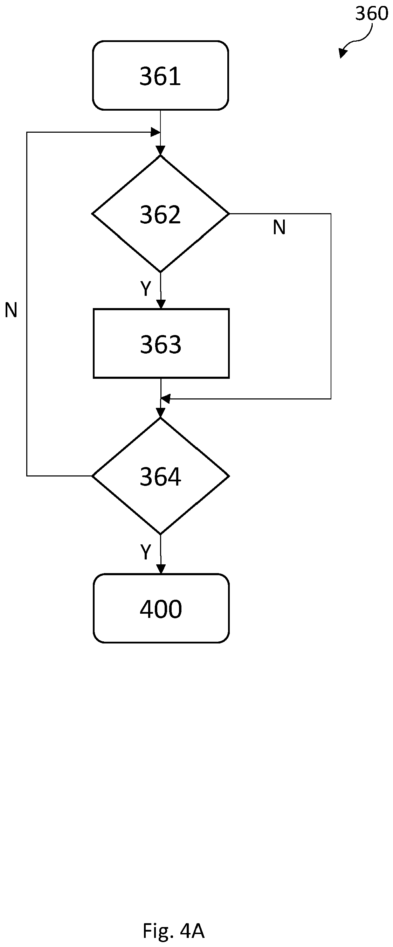

Next, in step 360 a first traversal of the ordered list of charging dispensers is carried out in order, to distribute all or part of the total current budget in such a manner among the charging dispensers to ensure that an offered current for the charging dispensers can at least be equal to a minimum charging current with which the some or all of the dispensers in the ordered list can charge the EV connected thereto. Fig. 4A shows a flow chart of steps that may be carried out as substeps of step 360.

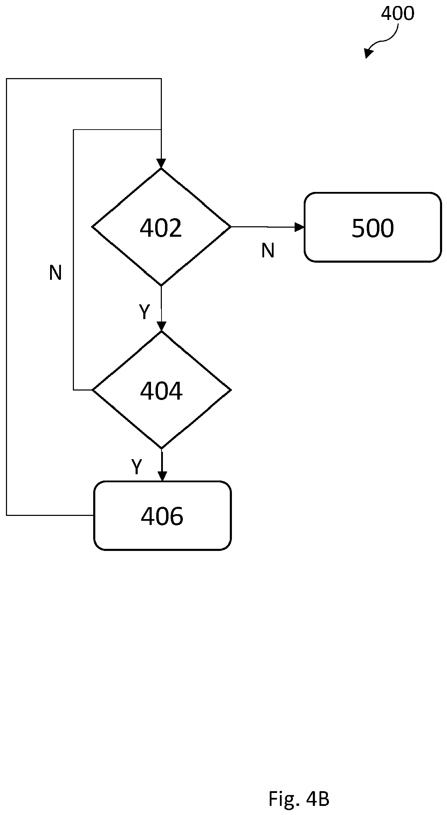

Next, in step 400, any remaining budget of the total current budget can be distributed among the candidate offered currents that are associated with the charging dispensers in the ordered list. An example of how this may be done is described with reference to Fig. 4B.

Finally, in step 500, the local dispenser sets its offered current to be equal to the candidate offered current for the local dispenser.

Fig. 4A shows a flow chart of steps that may be carried out as substeps of step 360 of Fig. 3. In step 361 the candidate offered currents that are associated with each dispenser in the list are initially set to zero. Next, in a first traversal of the ordered list is carried out. During this traversal, in step 362 it is checked whether, for the charging dispenser, the total current budget is greater than the minimum charging current associated with said charging dispenser. If so, then in step 363, then the candidate offered current is set to said minimum charging current and the minimum charging current is subtracted from the total current budget. If not, or after step 363 has finished, in step 363 it is checked whether the entire ordered list has been traversed, If so, then the first traversal of the list is completed and next step 400 step may carried out. If tin step 364 it is determined that the list has not been traversed in its entirety, then the step 362 is proceeded with using the next charging dispenser in the ordered list.

Fig. 4B shows a flow chart of steps that may be carried out as substeps of step 400. In step 402 it is checked whether while the total current budget remaining is greater than a charging current increment associated with any of the charging dispensers in the list. If this is not the case, the step 500 of Fig. 3 is proceeded with. Otherwise, a further traversal of the ordered list is carried out. During this traversal, in step 404 it is checked whether, for the charging dispenser, the total current budget is greater than the charging current increment associated with said charging dispenser and a sum of the charging current increment and the candidate offered current is less than a maximum charging current. If this is the case, then in step 406 the charging current increment is added to the candidate offered current and the charging current increment is subtracted from the total current budget. If this is not the case, or after step 406 has completed, step 402 is proceeded with using the next charging dispenser in the ordered list.

In summary, the invention relates to a system for charging electric vehicles, said system comprising a plurality of charging stations which each comprise one or more charging dispensers that are connected to a common power line, wherein each of said charging dispensers has a current budget assigned thereto, wherein the sum of said current budgets is greater than zero and less than a predefined maximum total current that the system is allowed draw from the power line, wherein the charging dispensers are in communication with each other such that at each charging dispenser a total current budget can be calculated as a sum of all current budgets, and such that at each charging dispenser it can be determined what share of this total current budget is available to the dispenser for charging an electric vehicle connected thereto. Dispensers can be added to the system or removed therefrom, substantially without affecting regular operation of the other dispensers.

## Claims

1. Charging system (100) comprising a plurality (110) of charging stations (111, 112, ... , 115), each charging station comprising a charging dispenser (111a, 112a, ...115a) adapted for charging an electric vehicle (121, 122, ... , 125) and for communicating with the other charging dispensers in the charging system through a communications network, wherein each of said charging dispensers is adapted for being connected to a power grid (190) via a power line (180) common to all charging dispensers in the charging system, and
wherein each of said charging dispensers has a current budget assigned thereto, wherein the sum of said current budgets is greater than zero and less than a predefined maximum total current,
wherein each charging dispenser is adapted for repeatedly carrying out the steps of:
i) determining a vehicle connected value indicative of whether an electric vehicle is connected to the charging dispenser, and determining a charging output value indicative of an actual charging current being output by the charging dispenser for charging said vehicle;
ii) transmitting, via said communications network to the other charging dispensers, a message comprising the charging dispenser's current budget, vehicle connected value, and charging output value, said message conforming to a predetermined specification;
iii) receiving, via said communications network and from each of the other charging dispensers, a message comprising the other charging dispenser's current budget, vehicle connected value, and charging output value;
iv) accepting only those received messages which conform to said predetermined specification;
v) calculating a total current budget as a sum of the current budget of said charging dispenser and the current budgets of the other charging dispensers according to the accepted messages;
vi) for each of said charging dispenser and the charging dispensers from which a message has been received and accepted, determining an offered current for charging an electric vehicle connected to the associated charging dispenser based on the charging dispenser's charging output value and the total current budget, preferably such that the sum of offered currents of the charging dispenser and the charging dispensers from which a message has been received and accepted, is less than or equal to the total current budget calculated by the charging dispenser in step v);
vii) in case the vehicle connected value indicates that a vehicle is connected to said charging dispenser, communicating the offered current associated with said charging dispenser determined in step vi) to the electronic vehicle, and/or limiting the maximum power output of said charging dispenser for charging the electric vehicle to the offered current.

2. Charging system according to claim 1, wherein in step ii) said message in is transmitted in a first data format used by the charging dispenser, and wherein in step iv) only those received messages are accepted that have a same data format as the first data format.

3. Charging system according to claim 1 or 2, wherein in step ii) said message further includes an indication of a firmware version of firmware that is active on said charging dispenser, and wherein in step iv) only those messages are accepted in which the indication of the firmware version indicates a same firmware version as the firmware version that is active on the charging dispenser.

4. Charging system according to any one of the preceding claims, wherein
the charging dispensers are adapted for communicating with each other in a local area network; and/or
wherein the charging dispensers are adapted for performing step ii) of transmitting said message to the other charging dispensers, by means of a broadcast message or a multicast message; and/or
wherein for each of said charging dispensers a maximum charging current is defined that is indicative of a maximum current the dispenser can provide for charging a vehicle, and wherein the predefined maximum total current is lower than the sum of maximum charging currents of the charging dispensers of the charging system; and/or
wherein the charging dispensers are connected to the common power line, preferably wherein the common powerline connects to the power grid via a breaker circuit, wherein the predefined maximum total current is less than a current at which the breaker circuit is adapted to disconnect the power line from the grid.

5. Charging system according to any one of the preceding claims, wherein in step i) the dispenser further determines a charging current requested by the electric vehicle, and wherein step vi) comprises:
generating an ordered list of the charging dispensers which have a requested current greater than zero,
associating a candidate offered current with each charging dispenser in said list and initially setting each candidate offered current to zero;
associating a minimum charging current with each charging dispenser, indicative of a minimum current required for charging the electric vehicle connected to said charging dispenser;
associating a charging current increment with each charging dispenser, indicative of an amount of current by which the candidate offered current may be increased if the candidate offered current is greater than or equal to the minimum charging current,
carrying out a first traversal of the list of charging dispensers in order, wherein for each charging dispenser in the list being traversed the following applies: if the total current budget is greater than the minimum charging current associated with said charging dispenser, then the candidate offered current is set to said minimum charging current and the minimum charging current is subtracted from the total current budget;
while the total current budget is greater than a charging current increment associated with any of the charging dispensers in the list, carrying out a further traversal of the list of charging dispensers in order, wherein for each charging dispenser in the list being traversed the following applies: if the total current budget is greater than the charging current increment associated with said charging dispenser, and if a sum of the charging current increment and the candidate offered current is less than a maximum charging current, then the charging current increment is added to the candidate offered current and the charging current increment is subtracted from the total current budget; and
setting the offered current for said charging dispenser to be equal to the candidate offered current for said charging dispenser.

6. Charging system according to claim 5, wherein the minimum charging current is communicated by the electric vehicle to the charging dispenser, or wherein the minimum charging current is stored in the charging dispenser as a fixed value that is independent from the electric vehicle connected to the charging dispenser.

7. Charging system according to any one of the preceding claims, wherein for each of said charging dispensers a maximum charging current is defined that is indicative of a maximum current the dispenser can provide for charging a vehicle, wherein for one or more of said charging dispensers, preferably for all of said charging dispensers in the system, the maximum charging current is larger than the current budget.

8. Charging system according to any one of the preceding claims, wherein the charging dispensers of the system form at least a first cluster of one or more charging dispensers having a same first firmware version and/or a same first data format, and a second cluster of one or more charging dispensers having said a same second firmware version different from the first firmware version and/or a same second data format different from the second data format.

9. Charging system according to any one of the preceding claims, wherein in case the offered current for a charging dispenser is below a minimum current required for charging, said charging dispenser is placed in a paused mode during which it does not request current from the total current budget, wherein the pause mode has a duration of at least 10 minutes.

10. Charging system according to any one of the preceding claims, wherein in step ii) the charging dispenser also transmits a message comprising the charging dispenser's current budget, vehicle connected value, and charging output value to itself, and wherein in step iii) the charging dispenser also receives and accepts the message it sent to itself.

11. Charging dispenser for use in a charging station of a charging system (100) which system comprises a plurality of charging stations which each comprise a charging dispenser, wherein the charging dispenser (111a) is adapted for charging an electric vehicle and for communicating with the other charging dispensers through a communications network, wherein said charging dispenser is adapted for being connected to a power grid (190) via a power line (180) common to all charging dispensers in the charging system, wherein for said charging dispenser a maximum charging current is defined that is indicative of a maximum current the dispenser can provide for charging to a vehicle, and
wherein for said charging dispenser a maximum charging current is defined that is indicative of a maximum current the dispenser can provide for charging to a vehicle, and
wherein said charging dispenser has a current budget assigned thereto, wherein the sum of said current budgets of all charging dispensers in the system is greater than zero and less than a predefined maximum total current, wherein said charging dispenser is adapted for repeatedly carrying out the steps of:
i) determining a vehicle connected value indicative of whether an electric vehicle is connected to the charging dispenser, and determining a charging output value indicative of an actual charging current being output by the charging dispenser for charging said vehicle;
ii) transmitting, via said communications network to the other charging dispensers, a message comprising the charging dispenser's current budget, vehicle connected value, and charging output value, said message having a first format;
iii) receiving, via said communications network and from each of the other charging dispensers, a message comprising the other charging dispenser's current budget, vehicle connected value, and charging output value;
iv) accepting only those received messages according to a criterium that depends on the transmitted message;
v) calculating a total current budget as a sum of the current budget of said charging dispenser and the current budgets of the other charging dispensers according to the accepted messages;
vi) for each of said charging dispenser and the charging dispensers from which a message has been received and accepted, executing same steps for determining an offered current for charging an electric vehicle connected to the associated charging dispenser based on the charging dispenser's charging output value and the total current budget, preferably such that the sum of offered currents of the charging dispenser and the charging dispensers from which a message has been received and accepted, is less than or equal to the total current budget calculated by the charging dispenser in step v);
vii) in case the vehicle connected value indicates that a vehicle is connected to said charging dispenser, communicating the offered current associated with said charging dispenser determined in step vi) to the electronic vehicle, and/or limiting the maximum power output of said charging dispenser for charging the electric vehicle to the offered current.

12. Method for operating a charging system according to any one of claims 1-10, comprising, for each charging dispenser in the system, carrying out the steps of:
i) determining a vehicle connected value indicative of whether an electric vehicle is connected to the charging dispenser, and determining a charging output value indicative of an actual charging current being output by the charging dispenser for charging said vehicle;
ii) transmitting, via said communications network to the other charging dispensers, a message comprising the charging dispenser's current budget, vehicle connected value, and charging output value, said message having a first format;
iii) receiving, via said communications network and from each of the other charging dispensers, a message comprising the other charging dispenser's current budget, vehicle connected value, and charging output value;
iv) accepting only those received messages according to a criterium that depends on the transmitted message;
v) calculating a total current budget as a sum of the current budget of said charging dispenser and the current budgets of the other charging dispensers according to the accepted messages;
vi) for each of said charging dispenser and the charging dispensers from which a message has been received and accepted, executing same steps for determining an offered current for charging an electric vehicle connected to the associated charging dispenser based on the charging dispenser's charging output value and the total current budget, preferably such that the sum of offered currents of the charging dispenser and the charging dispensers from which a message has been received and accepted, is less than or equal to the total current budget calculated by the charging dispenser in step v);
vii) in case the vehicle connected value indicates that a vehicle is connected to said charging dispenser, communicating the offered current associated with said charging dispenser determined in step vi) to the electronic vehicle, and/or limiting the maximum power output of said charging dispenser for charging the electric vehicle to the offered current.

13. Method according to claim 12, further comprising:
adding one or more additional charging dispensers to the system, comprising:
assigning a current budget to each of said one or more additional charging dispensers such that the sum of current budgets of all charging dispensers in the system, once said additional charging dispenser have been added to the system, is less than the predefined maximum total current, and adding the one ore more additional charging dispensers to the system by connecting them to the common power line and coupling them to the communications network, wherein during said adding charging dispensers present in the system before the one or more additional dispensers are added are allowed to continue operating in a regular manner,
preferably wherein the current budgets of the charging dispensers that are part of the system prior to adding the additional charging dispensers remain unaltered.

14. Method according to claim 12 or 13, further comprising removing one or more charging dispensers from the system, wherein during said removing the remaining charging dispensers in the system are allowed to continue operating in a regular manner.

15. Method according to claim 12, 13 or 14, further comprising replacing a firmware of one or more charging dispensers of the system with different firmware, wherein during said replacing the remaining charging dispensers in the system are allowed to continue operating in a regular manner.
